# DEMANDE DE BREVET EUROPEEN

(11) **EP 3 875 750 A1**
(43) Date de publication de la demande: **08.09.2021**
(21) Numéro de dépôt: 21160125.7
(22) Date de dépôt: 02.03.2021
(51) Int. Cl.: F03B 13/26

(54) **PROCÉDÉ ET SYSTÈME DE GÉNÉRATION ÉLECTRIQUE EN CONTINU À PARTIR DES MARÉES**

(30) Priorité: 05.03.2020 BE 202005150
(71) Demandeur: Fotaras, Eugenios, 1332 Genval (BE)
(72) Inventeur: Fotaras, Eugenios, 1332 Genval (BE)
(74) Mandataire: Office Kirkpatrick

(57) **Abrégé**

L'invention concerne une installation marée motrice de génération électrique en continu et perpétuelle comprenant au moins deux conteneurs comprenant chacun, dans leur partie inférieure une ouverture de passage d'eau de la marée et dans leur partie supérieure une ouverture de passage d'air, les ouvertures de passage d'air étant connectées à au moins une turbine à l'aide d'un système de vannes agencées pour gérer les flux d'air des conteneurs vers la turbine. Un des conteneurs permet la génération d'électricité durant les phases montantes et descendantes tandis que le deuxième conteneur permet la génération d'électricité pendant les phases d'étalé.

## Description

La présente demande concerne le domaine de la génération électrique marée motrice.

Dans le domaine des énergies renouvelable, les moyens de génération électrique les plus répandus sont les éoliennes ou les panneaux solaires. Ceux-ci présentent l'inconvénient d'avoir un rendement très variable selon les conditions météorologiques et les saisons, puisqu'elles dépendent du vent ou de la durée et de la puissance d'ensoleillement journalière.

Au contraire, la mer présente une source d'énergie beaucoup plus constante et prévisible. Des usines marées motrices existent, comme par exemple sur le Rance en Normandie, dans lesquelles des turbines hydrauliques sont positionnées dans le courant marin et sont actionnées lorsque la marée monte puis lorsqu'elle descend. Néanmoins, la maintenance de telles usines est compliquée, l'eau salée abimant rapidement les turbines.

D'autres systèmes, décrits par exemple dans EP2299107, convertissent le déplacement d'eau induit par la marée en un flux d'air. C'est ce flux d'air qui actionne ensuite des turbines de génération d'énergie électrique. Ce système permet de palier le problème d'usure lié au contact direct des turbines avec l'eau salée. Il reste néanmoins un problème de constance de la production électrique. Un cycle de marée comprend une phase montante et une phase descendante, durant lesquelles le niveau de l'eau varie de façon relativement constante, et, entre ces phases, ces phases dites d'étale, durant lesquelles le niveau de l'eau ne varie que très faiblement. Sur un cycle de douze heures, les phases d'étales représentent environ deux heures, durant lesquelles la production électrique est quasi-nulle.

La demanderesse a donc jugé nécessaire de proposer un système permettant de générer de l'électricité en continu à partir de l'énergie des marées.

### Solution de l'invention

La présente invention propose, à cet effet, une installation marée motrice de génération électrique comprenant au moins deux conteneurs comprenant chacun, dans leur partie inférieure une ouverture de passage d'eau de la marée et dans leur partie supérieure une ouverture de passage d'air, les ouvertures de passage d'air étant connectées à au moins une turbine à l'aide d'un système de vannes agencées pour gérer les flux d'air des conteneurs vers la turbine.

Par conteneur, on entend par exemple une cuve ou un bassin fermé, de préférence hermétiquement à l'air et à l'eau, définissant un volume. Les dimensions du conteneur peuvent varier selon de multiples paramètres, et notamment selon la puissance électrique souhaitée en sortie de l'installation.

La partie inférieure des conteneurs désigne le fond ou le bas des parois latérales. L'ouverture de passage d'eau de la marée doit de préférence être positionnée de façon à ce que le conteneur puisse être vidé.

Dans certains cas, par exemple pour des installations de grandes dimensions ou qui sont enterrées, cachées ou en retrait du front de mer pour des raisons esthétiques ou de protection du littoral, l'installation est positionnée à distance du bord de mer et l'ouverture de passage d'eau de mer est connectée à des moyens d'arrivée d'eau de mer, comme par exemple des tunnels, des buses ou des tuyaux, de préférence sensiblement horizontaux, dont une extrémité est connectée au conteneur et l'autre extrémité débouche dans ou juste au-dessus de la mer (selon la phase de marée).

Dans d'autres cas, par exemple pour des installations de petite taille, par exemple destinées à alimenter en électricité un phare marin, ou quelques habitations sur une ile, l'ouverture de passage d'eau de mer débouche directement dans ou juste au-dessus de la mer (selon la phase de marée).

Gérer les flux d'air des conteneurs vers la turbine comprend établir la connexion fluidique entre chaque conteneur et la turbine de façon maitrisée afin par exemple de contrôler le débit d'air arrivant sur la turbine, de contrôler l'origine de l'air (de quel conteneur il provient), et de contrôler la direction du flux d'air dans la turbine en fonction des mouvements d'air et d'eau dans les conteneurs. Les vannes permettent notamment d'établir alternativement la connexion fluidique entre chaque conteneur et la turbine en fonction de la phase du cycle de la marée.

La gestion des flux d'air se comprend dans le contexte de la méthode de l'invention mise en œuvre grâce à l'installation l'invention.

L'invention concerne également une méthode de génération d'énergie électrique à partir de la marée selon laquelle :
- Durant une phase de marée montante, de l'eau de mer pénétrant dans un premier conteneur, remplace de l'air qui s'échappe en actionnant une turbine électrique et de l'eau de mer pénètre dans un deuxième conteneur en comprimant l'air du deuxième conteneur jusqu'à atteindre un équilibre ;
- Durant une phase d'étale, on détend l'air comprimé dans le deuxième conteneur pour qu'il s'échappe en actionnant la turbine électrique ;
- Dans une phase de marée descendante, l'eau de mer se retirant du premier conteneur est remplacé par de l'air qui entre en actionnant la turbine électrique et de l'eau de mer se retire du deuxième conteneur en y créant une dépression jusqu'à atteindre un équilibre,
- Durant une phase d'étale, on laisse entrer de l'air dans le deuxième conteneur en actionnant la turbine électrique pour compenser la dépression.

Ainsi, la combinaison des deux conteneurs permet de générer de l'énergie en continu en gérant les flux d'air de façon judicieuse. Le premier conteneur sert principalement à actionner la turbine durant les phases montantes et descendantes de la marée, le deuxième conteneur permet d'emmagasiner de l'énergie durant ces phases, sous forme de pression ou de dépression et de prendre le relais du premier conteneur dans les phases d'étale ou d'autres moments où le premier conteneur ne serait plus efficace, par exemple durant des grandes marées où l'amplitude le la marée dépasserait la hauteur du premier conteneur.

L'invention sera mieux comprise à l'aide de la description suivante de plusieurs mises en œuvre de l'invention, en référence au dessin en annexe, sur lequel :
- la figure 1 est une vue en coupe d'une installation marée motrice selon l'invention, et
- les figures 2 à 6 représentent les différentes étapes de la méthode de production d'énergie électrique avec l'installation de la figure 1.

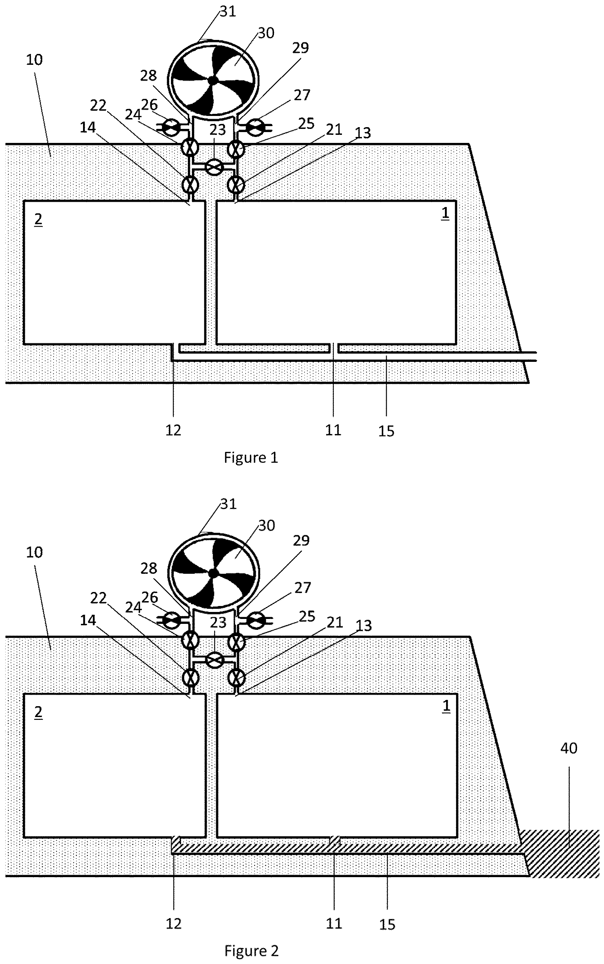

En référence à la figure 1, une installation marée motrice de génération électrique est implantée en partie sous terre, par exemple sous une digue 10 et comprenant un premier conteneur 1 et un deuxième conteneur 2, ici tous les deux de forme parallélépipédique, le deuxième conteneur étant ici plus petit que le premier conteneur. Une ouverture 11 de passage de d'eau est ménagée dans le fond du premier conteneur 1 et une ouverture 13 de passage d'air est ménagée dans sa partie supérieure. Une ouverture 12 de passage de d'eau est ménagée dans le fond du deuxième conteneur 2 et une ouverture 14 de passage d'air est ménagée dans sa partie supérieure.

Les ouvertures 11 et 12 de passage d'eau des deux conteneurs sont connectées à un tuyau 15 qui débouche dans l'eau de mer (ici non représentée) sur la ligne de côte, c'est-à-dire hors de la digue.

Les ouvertures 13 et 14 de passage d'air sont connectées à un système de canalisations 28, 29 et de vannes 21 à 27 agencées pour gérer les flux d'air entre les conteneurs 1 et 2 et une turbine 30 enfermée dans un caisson ajusté 31.

La canalisation 29 monte ici à la verticale du premier conteneur 1 et débouche dans une entrée d'air dans le caisson 31 de la turbine. La canalisation 28 monte ici à la verticale du deuxième conteneur et débouche dans une sortie d'air du caisson 31 de la turbine. Les vannes 21 et 22 sont placées respectivement sur les canalisations 29 et 28, juste au-dessus des passages d'air 13 et 14 des conteneurs 1 et 2. Au dessus de ces vannes un bras transversal équipé de la vanne 23 connecte les canalisations 29 et 28. Au dessus de ce bras transversal, les vannes 25 et 24 sont placées respectivement sur les canalisations 29 et 28. Entre la vanne 25 et l'entrée d'air de la turbine, la canalisation 29 comprend un premier échappement équipé de la vanne 27, tandis qu'entre la vanne 24 et la sortie d'air de la turbine, la canalisation 28 est équipée d'un deuxième échappement équipé de la vanne 26.

La turbine est ici une turbine à un sens unique de rotation et les vannes permettent de gérer les flux d'air entre les conteneurs et la turbine de façon à ce que l'air arrive toujours sur la turbine dans la même direction. D'autres arrangements sont toutefois envisageables.

Le fonctionnement de l'installation va maintenant être décrit.

La figure 2 représente la situation à marée basse. Le niveau de la mer 40 est à son plus bas et remplit ici, par effet de vases communicants, que le tuyau 15.

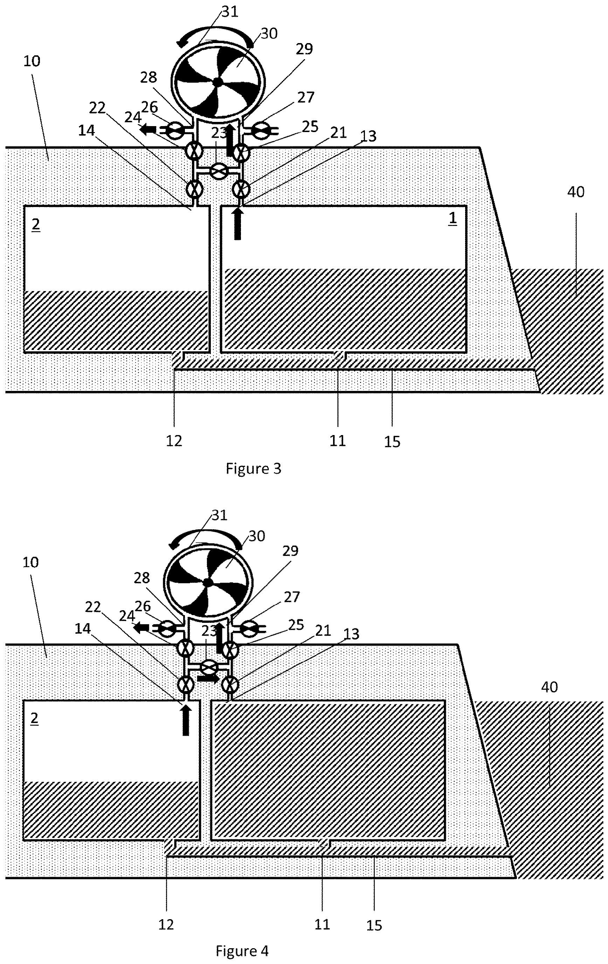

Durant une phase de marée montante, représentée à la figure 3, les vannes 21 et 25 sur la canalisation 29 et la vanne de sortie d'air 26 sont en position ouverte. Les autres vannes sont fermées. Le niveau de la mer 40 monte, le conteneur 1 étant en communication fluidique avec l'extérieur via la turbine grâce à la séquence des vannes ouvertes, l'eau de mer y pénètre selon le principe des vases communicants. L'eau, dont le niveau s'élève dans le conteneur 1, remplace l'air qui s'échappe par la canalisation 29 en actionnant une turbine électrique 30, comme illustré par les flèches. De l'eau de mer pénètre également dans le deuxième conteneur 2, dont la vanne 22 en sortie du passage d'air 14 est fermée. L'air surnageant l'eau pénétrant dans le conteneur 2 est en conséquence comprimé jusqu'à atteindre un équilibre entre la pression exercée par l'air dans le conteneur 2 et la pression du niveau d'eau de mer.

A la fin de la marée montante s'installe une phase d'étale, représentée à la figure 4, durant laquelle ne niveau de la mer augmente puis diminue très légèrement. A début de cette phase, la vanne 21 est fermée et les vannes 22 et 23 sont ouvertes pour laisser s'échapper l'air comprimé du deuxième conteneur 2 en actionnant la turbine électrique 30 comme représenté par les flèches. Le niveau d'eau dans le conteneur 2 va monter sensiblement jusqu'à la fin de l'étale.

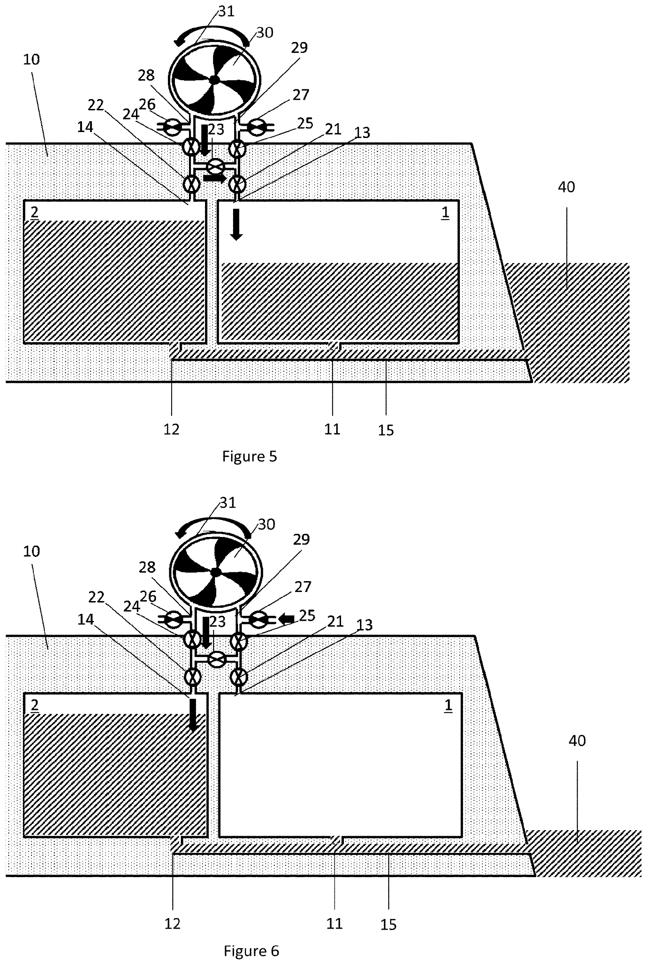

Débute alors une phase de marée descendante, comme illustrée à la figure 5. Les vannes 22, 25 et 26 sont alors fermées et les autres vannes ouvertes. L'eau de mer se retire du premier conteneur 1 par effet de vases communiquant avec la mer. L'eau est remplacée par de l'air qui entre via la vanne 27 et actionne la turbine 30 avant de rejoindre le conteneur 1 via les vannes ouvertes 24 et 23. De l'eau de mer se retire également du deuxième conteneur 2 en y créant une dépression, la vanne 22 étant fermée, jusqu'à atteindre un équilibre.

Durant la phase d'étale à marée basse qui suit, on ferme les vannes 21 et 23 et on ouvre la vanne 22 pour mettre en communication le conteneur 2 avec l'air ambiant. L'air entre dans le deuxième conteneur 2 qui se vide en actionnant la turbine électrique 30 pour compenser la dépression. La situation décrite sur la figure 2 est à nouveau atteinte et le cycle de la marée peut recommencer.

Le principe de l'invention permet ainsi de produire de l'énergie en continu à partir de la marée dont les phases ne sont pas constantes, en termes de déplacement d'eau. Ce principe n'entraine aucune génération de dioxyde de carbone et ne dépend pas de la météo.

Par exemple ici, le premier conteneur est un bassin couvert qui peut avoir une surface de 10 000 m² et une hauteur de 5 m, soit un volume de 50 000 m³, tandis que le deuxième conteneur est un bassin couvert qui peut avoir une surface de 5 000 m² pour une hauteur de 5 m soit un volume de 25 000 m³. Si la mer monte de 5 m en 5 heures, alors 10 000 m³ d'air sont déplacés par heure tandis que la pression peut s'accumule dans le deuxième conteneur pour libérer également 10 000 m³ pendant l'heure d'étale haute. Le même déplacement d'air peut avoir lieu ensuite par aspiration durant la marée descendante et la phase d'étale basse.

Selon la géolocalisation de l'installation, ses dimensions peuvent dépendre du marnage, c'est-à-dire de l'amplitude des marées, et de la puissance désirée pour l'installation.

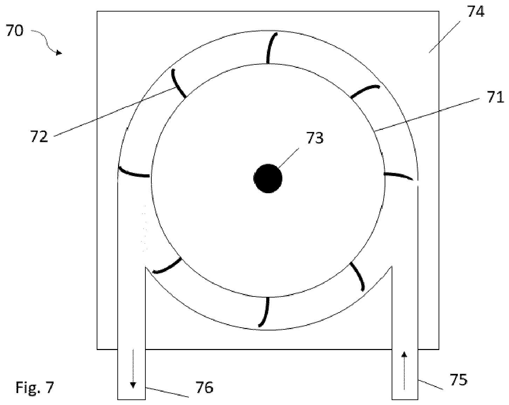

Ici, une turbine à rotation à sens unique a été décrite. En référence à la figure 7, la turbine à air 70 (vue de face) comprend un cœur 71 sur lequel sont fixées longitudinalement plusieurs ailettes 72. Ce cœur 71 de la turbine est plein et mobile en rotation autour d'un arbre 73. Ce mouvement peut être facilité à l'aide de roulements mécaniques (ici non représentés). Les ailettes 72 sont identiques et uniformément réparties sur le pourtour du cœur 71. Leur nombre varie suivant les spécifications de l'installation globale. Les ailettes sont de préférence courbes bien que leur rayon de courbure doit être maximum. En effet, augmenter le rayon de courbure permet de minimiser le freinage de l'air lors de la détente de celui-ci dans la turbine et ainsi optimiser la rotation de la turbine. La turbine 7 comprend également une enveloppe 74 dans laquelle se trouve le cœur de la turbine et les ailettes. L'enveloppe permet de contenir l'air dans un volume fermé, cette enveloppe est ici un cercle mais elle pourrait également être en forme de rectangle. De façon générale, il est préférable d'augmenter les rayons de courbure au niveau de la turbine pour minimiser la perte d'énergie au niveau de la turbine. Finalement, la turbine est rendue opérationnelle grâce aux conduits d'injection 75 et de sortie d'air 76 qui sont agencés tangents à l'enveloppe circulaire 74 afin de maximiser la force de poussée lors de la détente de l'air sous pression.

Il est envisageable d'installer plusieurs turbines en parallèle ou en série pour optimiser la récupération d'énergie.

D'autres types de générateurs peuvent tout à fait être utilisés selon l'installation, comme par exemple des moteurs à piston. Alternativement, la turbine peut aussi être remplacée par une pompe, notamment une pompe à huile destinée à alimenter une machine.

La ou les turbines sont reliées à des unités de génération électrique tout à fait classique directement ou indirectement par le biais de l'arbre 73.

L'agencement des vannes est ici illustratif d'une configuration particulière, mais peut être différent selon les besoins. Les vannes sont de préférences pilotées automatiquement, selon un programme ou en réponse à des capteurs placés judicieusement dans l'installation.

Les conteneurs peuvent par exemple être fabriqués en béton armé, en acier renforcé, voir en matière plastique ou avec une combinaison de matériaux selon la dimension de l'installation ou d'autres facteurs environnementaux. Les matériaux et caractéristiques de forme des conteneurs sont liés à la taille de l'installation et dépendent de la résistance à la pression que doit pouvoir supporter l'installation, à la résistance à la corrosion de l'eau de mer, aussi bien que du terrain qui l'entoure.

L'installation a été ici décrite en partie enterrée dans une digue, mais elle peut être placée enterrée, hors sol, plus ou moins proche du front de mer... Le principe est particulièrement flexible.

Ce qui est décrit ici comme un conteneur peut éventuellement être si-besoin subdivisé en plusieurs sous-conteneurs de même fonction pour des raisons techniques.

La durée de 1''étale n'est pas définies précisément correspond généralement à la période de temps durant laquelle le courant est nul ou durant laquelle le niveau de l'eau ne varie pas. L'étale peut toutefois s'entendre pour l'invention de façon plus large et comprendre également jusqu'à 5%, jusqu'à 10% voire jusqu'à 15% de la période de marée montante et/ou de marée descendante.

## Revendications

1. Installation marée motrice de génération électrique comprenant au moins deux conteneurs (1, 2) comprenant chacun, dans leur partie inférieure une ouverture (11, 12) de passage d'eau de la marée et dans leur partie supérieure une ouverture (13, 14) de passage d'air, les ouvertures de passage d'air étant connectées à au moins une turbine (30) à l'aide d'un système de vannes (21-27) agencées pour gérer les flux d'air entre les conteneurs (1, 2) et la turbine (30) .

2. Installation selon la revendication 1, dans laquelle le système de vannes (21-27) est agencé pour gérer les flux d'air des conteneurs vers la turbine en établissant alternativement la connexion fluidique entre chaque conteneur et la turbine en fonction de la phase du cycle de la marée.

3. Installation selon l'une des revendications 1 et 2, le système de vannes (21-27) est agencé pour contrôler le débit, la direction et/ou l'origine de l'air arrivant sur la turbine (30).

4. Installation selon l'une des revendications 1 à 3, dans laquelle les ouvertures (11, 12) de passage d'eau de mer sont connectées à des moyens d'arrivée d'eau de mer.

5. Installation selon l'une des revendications 1 à 4, dans laquelle la turbine est à sens unique de rotation.

6. Installation selon l'une des revendications 1 à 5, dans laquelle plusieurs turbines sont installées en parallèle et/ou en série.

7. Installation selon l'une des revendications 1 à 6, dans laquelle au moins les conteneurs sont enterrés.

8. Méthode de génération d'énergie électrique à partir de la marée selon laquelle :
- durant une phase de marée montante, de l'eau de mer pénétrant dans un premier conteneur, remplace de l'air qui s'en échappe en actionnant une turbine électrique et de l'eau de mer pénètre dans un deuxième conteneur en comprimant l'air du deuxième conteneur jusqu'à atteindre un équilibre ;
- durant une phase d'étale, on détend l'air comprimé dans le deuxième conteneur pour qu'il s'en échappe en actionnant la turbine électrique ;
- dans une phase de marée descendante, l'eau de mer se retirant du premier conteneur est remplacé par de l'air qui entre en actionnant la turbine électrique et de l'eau de mer se retire du deuxième conteneur en y créant une dépression jusqu'à atteindre un équilibre, et
- durant une phase d'étale, on laisse entrer de l'air dans le deuxième conteneur en actionnant la turbine électrique pour compenser la dépression.

9. Une turbine à air (70) comprenant :
- un cœur cylindrique (71) sur lequel sont fixées longitudinalement des ailettes (72), ledit cœur (71) étant mobile en rotation autour d'un axe (73) ;
- une enveloppe (74) contenant le cœur (71) et les ailettes agencées concentriquement à l'axe (73) de façon à limiter le volume d'air circulant dans la turbine au volume occupé par les ailettes en rotation; et
- un conduit d'entrée (75) et un conduit de sortie (76) d'air dans la turbine, agencés de manière tangente au cercle défini par les ailettes en rotation .

10. Installation marée motrice de génération électrique selon la revendication 1, dans laquelle la turbine est la turbine selon la revendication 9.
